# EUROPÄISCHE PATENTANMELDUNG

(11) **EP 2 341 335 A2**
(43) Veröffentlichungstag der Anmeldung: **06.07.2011**
(21) Anmeldenummer: 10196100.1
(22) Anmeldetag: 21.12.2010
(51) Int. Cl.: G01N 27/70

(54) **Sensoranordnung und Verfahren zur Detektion von Fluiden mit einer bestimmten stofflichen Zusammensetzung**

(30) Priorität: 21.12.2009 AT 20202009
(71) Anmelder: GUNYTRONIC gasflow sensoric systems GmbH, 4300 St. Valentin (AT)
(72) Erfinder: Lalic, Nicola, 4300 St. Valentin (AT); Naderhirn, Michael, 4300 St. Valentin (AT); Rauecker, Gerald, 4300 St. Valentin (AT)
(74) Vertreter: Patentanwälte Westphal, Mussgnug & Partner

(57) **Zusammenfassung**

Es wird ein Verfahren zur Detektion von Fluiden mit einer bestimmten stofflichen Zusammensetzung beschrieben. Das Verfahren umfasst zumindest folgende Schritte: Ionisieren des Fluids mit Hilfe von zumindest einer mit einer Hochspannungsquelle verbundenen Hochspannungselektrode, sodass in der Hochspannungselektrode Ladungsträger erzeugt, diese emittiert und von Messelektroden zumindest teilweise wieder eingefangen werden; Messen von elektrischen Größen an mehreren, sowohl von der Hochspannungselektrode als auch zueinander räumlich beabstandet angeordneten Messelektroden; Bestimmen der räumlichen Verteilung der gemessenen elektrischen Größen; Vergleichen der räumlichen Verteilung der gemessenen elektrischen Größen mit zumindest einer Referenzverteilung; Bereitstellen eines Ausgangssignals, welches Abhängig von dem Vergleich das Vorhandensein einer Fluidkomponente und/oder deren Konzentration in dem Fluid anzeigt.

## Beschreibung

Die Erfindung betrifft eine Sensoranordnung und ein Verfahren zur Detektion von Fluiden mit einer bestimmten stofflichen (d.h. molekularen und/oder atomaren) Zusammensetzung, insbesondere zur Erkennung von bestimmten, in einem Strömungskanal fließenden Gasen und zur Messung der Gasgeschwindigkeit im Rohr.

Aus der Publikation G.W. Malaczynski, T. Schroeder: "An Ion-Drag Air Mass-Flow Sensor for Automotive Applications", In: IEEE Trans. on Industry Applications, Bd. 28, Nr. 2, März 1992, ist ein Strömungssensor für die Messung der angesaugten Luftmenge einer Verbrennungskraftmaschine bekannt.

Ein derartiger Sensor basiert auf dem Prinzip, dass die räumliche Ionenverteilung und damit die ortsabhängige Stromdichte in einem ionisierten Gas durch die Bewegung (Strömung) des Gases verschoben wird. Diese Ionenverteilung hängt von der Mobilität der Ionen ab, die wiederum eine charakteristische Eigenschaft der ionisierten Atome des jeweiligen Stoffs (z.B. Gasgemisch) ist. Deshalb führen unterschiedliche stoffliche Zusammensetzungen von Fluiden zu unterschiedlichen Ionenverteilungen.

Für verschiedene Anwendungen in der Prozessmesstechnik (z.B. im Abgasrückführungssystem einer Verbrennungskraftmaschine) ist es wünschenswert, neben der Strömungsgeschwindigkeit auch die stoffliche Zusammensetzung des strömenden Fluids zu bestimmen oder zumindest Fluide mit einer bestimmten Stoffzusammensetzung zu detektieren.

Die der Erfindung zugrunde liegende Aufgabe besteht also darin, eine Sensoranordnung bzw. ein Verfahren zur Detektion von Fluiden einer bestimmten stofflichen Zusammensetzung zur Verfügung zu stellen.

Diese Aufgabe wird durch ein Verfahren gemäß Anspruch 1 bzw. eine Sensoranordnung gemäß Anspruch 11 gelöst. Beispielhafte Weiterbildungen der Erfindung sind Gegenstand der abhängigen Ansprüche.

Es wird ein Verfahren zur Detektion von Fluiden mit einer bestimmten stofflichen Zusammensetzung beschrieben. Das Verfahren umfasst zumindest folgende Schritte: Ionisieren des Fluids mit Hilfe von zumindest einer mit einer Hochspannungsquelle verbundenen Hochspannungselektrode, sodass in der Hochspannungselektrode Ladungsträger erzeugt, diese emittiert und von Messelektroden zumindest teilweise wieder eingefangen werden; Messen von elektrischen Größen an mehreren, sowohl von der Hochspannungselektrode als auch zueinander räumlich beabstandet angeordneten Messelektroden; Bestimmen der räumlichen Verteilung der gemessenen elektrischen Größen; Vergleichen der räumlichen Verteilung der gemessenen elektrischen Größen mit zumindest einer Referenzverteilung; Bereitstellen eines Ausgangssignals, welches Abhängig von dem Vergleich das Vorhandensein einer Fluidkomponente und/oder deren Konzentration in dem Fluid anzeigt.

Durch das Verfahren wird eine einfache Detektion bzw. Unterscheidung unterschiedlicher Fluide bzw. Fluidzusammensetzungen (z.B. Gasgemische) in einem Strömungskanal ermöglicht. Des Weiteren können mit dem Verfahren auch Strömungsgeschwindigkeiten ermittelt werden.

Unter "stofflicher Zusammensetzung" eines Fluids wird die molekulare bzw. atomare Zusammensetzung eines aus unterschiedlichen Fluidkomponenten bestehenden Fluids verstanden, insbesondere ein aus verschiedenen Gaskomponenten bestehendes Gasgemisch (z.B. wären im Falle von Luft die Komponenten im Wesentlichen Stickstoff, Sauerstoff, Argon, Wasserdampf und Kohlendioxid). Die Detektion von Fluiden mit einer bestimmten stofflichen Zusammensetzung setzt nicht nur die Erkennung einer einzelnen Komponente voraus (insbesondere nicht nur von im Fluid gelösten Feststoffpartikel oder von in einem Gas vorhandenen Flüssigkeitströpfchen) sondern die Identifizierung eines Fluids (z.B. Eines Gasgemisches) mit einer beliebigen die molekularen bzw. atomaren Zusammensetzung.

Die Erfindung wird im Folgenden anhand von in den Abbildungen dargestellten Ausführungsbeispielen näher erläutert. In den Abbildungen zeigt:
- Figur 1: eine schematische Skizze eines Längsschnittes einer Sensoranordnung gemäß einem Beispiel der Erfindung, die Sensoranordnung umfasst eine Hochspannungselektrode und mehrere Messelektroden, die in Strömungsrichtung entlang der Längsachse des Strömungskanals angeordnet sind;
- Figur 2: eine schematische Skizze einer Sensoranordnung gemäß einem weiteren Beispiel der Erfindung, ähnlich dem Beispiel aus Fig. 1;

- Figur 3: eine schematische Skizze und ein Diagramm zur Erläuterung der Funktionsweise des Beispiels aus Fig. 2;
- Figur 4: perspektivische Darstellungen der Sensoranordnung aus Figur 1;
- Figur 5: eine alternatives Ausführungsbeispiel der Hochspannungselektrode in der Sensoranordnung aus Fig. 2;
- Figur 6: eine weiteres Ausführungsbeispiel der Hochspannungselektrode in der Sensoranordnung aus Fig. 2;
- Figur 7: eine schematische Skizze des Mess- und Datenverarbeitungssystems für die Sensoranordnungen gemäß den Beispielen aus Fig. 1 bis 6; und
- Figur 8: eine beispielhaftes Diagramm der erzielten Messdaten.

In den Figuren bezeichnen gleiche Bezugszeichen gleiche Komponenten bzw. Signale mit gleicher Bedeutung.

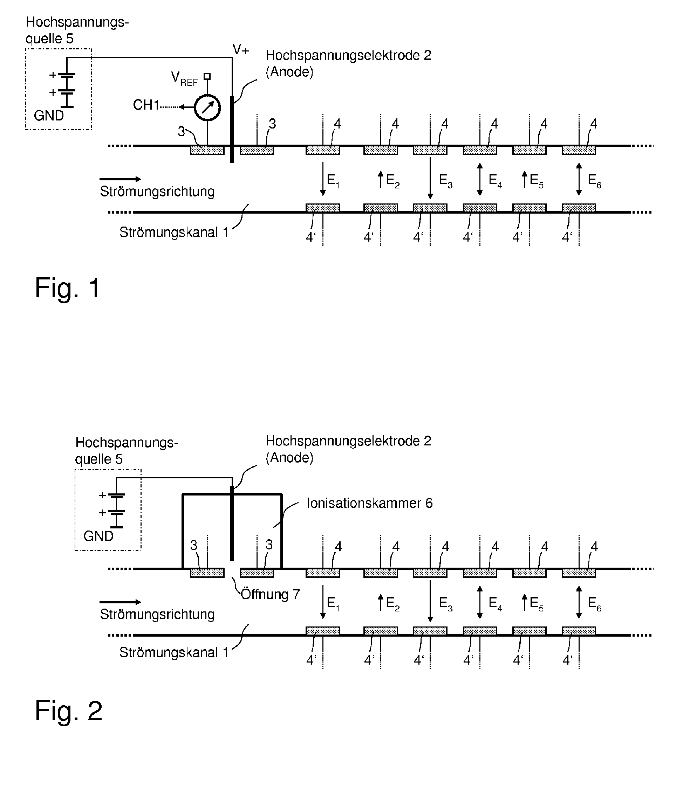

Figur 1 zeigt eine Seitenansicht einer Sensoranordnung gemäß einem Beispiel der Erfindung mit einem Strömungskanal 1, einer darin angeordneten mit einer Hochspannungsquelle 5 verbundenen Hochspannungselektrode 2 und mehreren Messelektroden 3 und 4. Der Strömungskanal 1 kann beispielsweise ein Rohr oder ein Schacht sein, durch das bzw. durch den das interessierende Fluid strömt. Die Strömungsrichtung ist durch einen Pfeil angedeutet. Ein Strömungskanal im Sinne dieser Beschreibung muss nicht zwangsläufig einen geschlossenen Querschnitt aufweisen, sondern kann auch durch eine Fläche gebildet werden, entlang der das interessierende Fluid strömt. Unabhängig von der Querschnittsform des Strömungskanals zeigt die Richtung der Strömung dabei im Mittel entlang einer Längsachse des Strömungskanals 1, d.h. der Vektor der mittleren Strömungsgeschwindigkeit hat dieselbe Orientierung wie eine Längsachse des Strömungskanals 1.

Die Hochspannungselektrode 2 ist an der Innenwandung des Strömungskanals 1 angeordnet: Gemäß? dem in Figur 1 dargestellten Beispiel ist die Hochspannungselektrode 2 durch eine (abgedichtete) Öffnung in der Kanalwand durchgesteckt. An der Hochspannungselektrode 2 liegt eine derart hohe Spannung V+ (Gleich- oder Wechselspannung) an, dass das strömende Fluid zumindest teilweise ionisiert und folglich leitfähig wird, wobei die Spannung V+ von einer Hochspannungsquelle 5 erzeugt wird. Je nach Anwendung kann Spannung an der die Hochspannungselektrode mehrere Kilovolt betragen. Im dargestellten Beispiel erstreckt sich die Hochspannungselektrode 2 nur geringfügig in den Strömungskanal 1, um die Strömung (d.h. das Strömungsprofil) nicht zu beeinflussen. Die Elektrode 2 kann auch flach ausgebildet sein und an der Innenwandung des Kanals anliegen. Je nach Anwendung können auch mehrere Hochspannungselektroden 2 im Strömungskanal 1 angeordnet sein. Unterschiedliche Ausführungsbeispiele der Hochspannungselektrode sind in den Figuren 2, 5 und 6 gezeigt.

Auf beiden Seiten (stromaufwärts und stromabwärts) der Hochspannungselektrode 2 können im Strömungskanal 1 mehrere Messelektroden 3 und 4 angeordnet sein. Bei dem in Figur 1 dargestellten Beispiel ist auf beiden Seiten (stromaufwärts und stromabwärts) je eine Messelektrode 3 angeordnet. Des weiteren sind stromabwärts von der Hochspannungselektrode 2 weitere Messelektroden 4 angeordnet und zwar sowohl auf der gleichen Seite des Strömungskanals wie die Hochspannungselektrode 2 sowie auf der der Hochspannungselektrode 2 gegenüberliegenden Seite.

Die Messelektroden sind beispielsweise flach ausgebildet und liegen an der Innenwandung des Strömungskanals 1 an, um die Strömung nicht zu beeinflussen. Im Fall eines Strömungskanals mit einem ringförmigen Querschnitt (Rohr als Strömungskanal) können die Messelektroden 3, 4 ebenfalls flach an der Innenwandung des Strömungskanals 1 anliegende Ringsegmente sein, die in Längsrichtung und Umfangrichtung an unterschiedlichen Stellen des Strömungskanals (Rohres) angeordnet sind. Gemäß dem vorliegenden Beispiel ist jeder Messelektrode 4 eine weitere Messelektrode 4' zugeordnet. Beispielsweise können zwei korrespondierende Messelektroden 4, 4' auf gegenüberliegenden Seiten des Strömungskanals angeordnet sein.

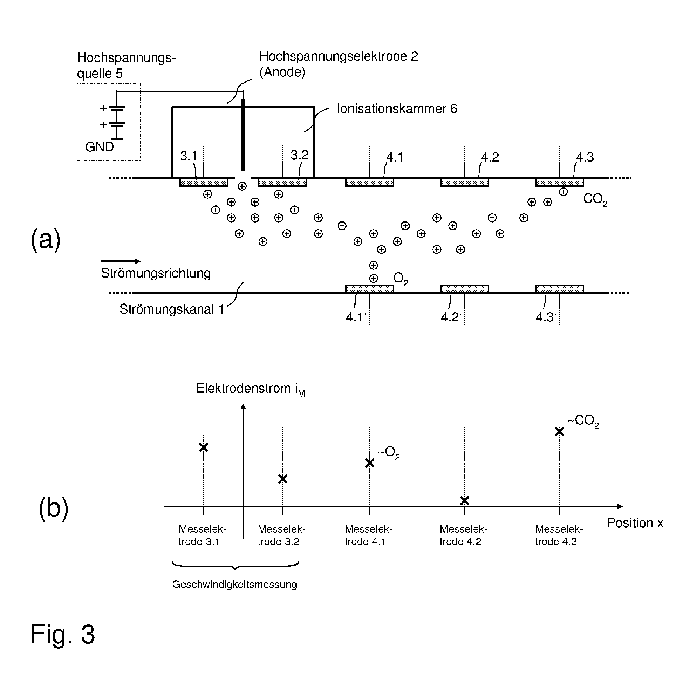

An jeder Messelektrode 3, 4 kann eine elektrische Größe wie z.B. ein Elektrodenstrom i_{M} gemessen werden. In Figur 1 ist dies durch den mit einer Messelektrode 3 verbundenen Amperemeter 12 skizziert. Des weiteren kann an die Messelektroden 3, 4 je ein definiertes Potential (z.B. ein Referenzpotential V_{REF}, oder das Massepotential GND) angelegt werden. In dem Beispiel gemäß Figur 1 liegt zudem an jedem Messelektrodenpaar 4, 4' eine definierte Spannung an, die ein entsprechendes elektrisches Feld (E-Feld E₁, E₂, E₃, E₄, E₅, E₆) zwischen jeweils einander zugeordneten Messelektroden 4, 4' zur Folge hat. Aus den an den Messelektroden gemessenen elektrischen Größen (zB. aus den Elektrodenströmen i_{M}) kann auf die stoffliche Zusammensetzung des strömenden Fluids sowie auf die Strömungsgeschwindigkeit (bzw. den Volumen- oder Massenstrom) geschlossen werden. Die Funktionsweise der in Figur 1 dargestellten Sensoranordnung wird weiter unten unter Bezugnahme auf die Figur 3 noch genauer erläutert.

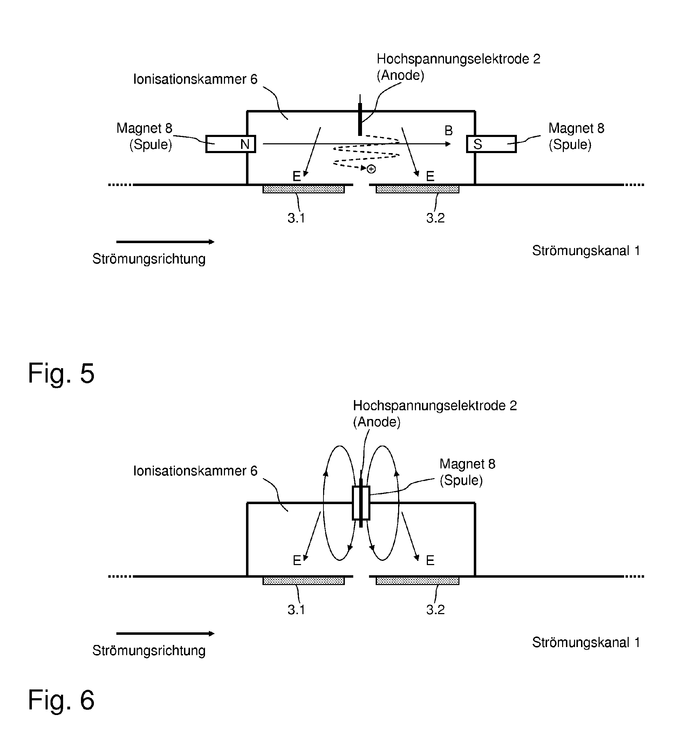

Das in Figur 2 gezeigte Beispiel einer Sensoranordnung entspricht abgesehen von der Positionierung der Hochspannungselektrode 2 dem Beispiel aus Figur 1. In diesem Beispiel ragt die Hochspannungselektrode 2 (Anode) nicht in den strömungsbanal 1 hinein, sondern ist in einer Ionisationskammer 6 angeordnet, die über eine Öffnung 7 mit dem Strömungskanal 1 in Verbindung steht. Auf beiden Seiten (stromaufwärts und stromabwärts) der Öffnung 7 sind, ähnlich wie in dem Beispiel aus Figur 1, Messelektroden 3 an der Innenwand des Strömungskanals 1 angeordnet. Durch die hohe Spannung V+, die an der Hochspannungselektrode 2 anliegt, wird das Fluid in der Ionisationskammer ionisiert und somit leitfähig. Die Ladungsträger (Ionen) werden entsprechend beschleunigt und treten durch die Öffnung hindurch in den Strömungskanal 1, wo sie an den Messelektroden 3 und 4 mit den entsprechenden entgegengesetzten Ladungsträgern (Elektronen) rekombinieren, was in den Messelektroden 3, 4 einen messbaren Elektrodenstrom i_{M} zur Folge hat. Durch die Anordnung der Hochspannungselektrode 2 (Anode) in der Ionisationskammer 6 ist diese vor zu starkem Teilchenbeschuss und dem damit verbundenen Verschleiß geschützt. Weitere Ausführungsbeispiele der Anodenanordnung in der Ionisationskammer 6 sind in den Figuren 5 und 6 gezeigt.

Die grundsätzliche Funktionsweise der oben erläuterten Sensoranordnungen zur Detektion von Fluiden einer bestimmten stofflichen Zusammensetzung und zur Messung der Geschwindigkeit der Strömung wird nachfolgend anhand der Figur 3 erläutert.

In Figur 3a ist ein Teil der Sensoranordnung aus Figur 2 vergrößert dargestellt. Zunächst werden nur die Messelektroden 4, und 4' betrachtet. Die drei im vorliegenden Beispiel eingezeichneten Elektrodenpaare sind mit 4.1, 4.1', 4.2, 4.2' sowie 4.3 und 4.3' bezeichnet (kurz: 4.x, 4.x'). Die (in Strömungsrichtung) symmetrisch um die Öffnung 7 (bzw. um die Hochspannungselektrode 2) angeordneten Messelektroden 3.1 und 3.2 liegen annähernd auf Massepotential (0 V) oder einem anderen Referenzpotential (z.B. V_{REF}). Im Bezug auf das Potential der Messelektroden 3.1 und 3.2 ist die Spannung V+ der Hochspannungselektrode so hoch, dass das Fluid ionisiert wird und Ionen durch die Öffnung 7 in den Strömungskanal und damit in den Fluidstrom emittiert werden. An den Messelektroden 4.x, 4.x' liegen ebenfalls auf einem im Vergleich zur Hochspannungselektrode 2 niedrigen Potential. Durch das resultierende Potentialgefälle (d.h. das elektrische Feld) von der Hochspannungselektrode 2 zu den Messelektrode 4.x, 4.x' als auch durch die Strömungsgeschwindigkeit des Fluids werden die Ionen zu den Messelektroden 4.x, 4.x' transportiert und rekombinieren dort mit der Ionenladung entgegengesetzten Ladungsträgern (z.B. Elektronen), was einen Elektrodenstrom i_{M} in der jeweiligen Elektrode zur Folge hat.

Die Höhe des Elektrodenstroms i_{M} hängt von der Position der betrachteten Messelektrode 4.x in Längsrichtung (Strömungsrichtung) des Strömungskanals 1 ab. Bei einer Vielzahl entlang der Strömung im Strömungskanal angeordneten Messelektroden 4.x lässt sich also durch Messung der einzelnen Elektrodenströme i_{M} ein von einer Position x entlang der Längsrichtung des Strömungskanals 1 abhängiger Elektrodenstrom i_{M}(x) ermitteln, wobei die Funktion i_{M}(x) ortsdiskret ist, d.h. man erhält nur an jenen Positionen x Stromwerte i_{M}(x), an denen sich im Strömungskanal 1 eine Messelektrode 4.x befindet.

Der ortsabhängige Stromverlauf i_{M}(x), z.B. die Position der Maxima und Minima, ist charakteristisch für eine bestimmte stoffliche Zusammensetzung des Fluids. Durch Vergleich mit Referenzkurven, welche eine bekannte stoffliche Fluidzusammensetzung repräsentieren, lässt sich anhand der gemessenen Elektrodenströme i_{M}(x) detektieren, ob es sich bei dem strömenden Fluid um ein bestimmtes bekanntes Fluid handelt. Bei bekannten Stoffkomponenten (z.B. Gemisch aus O₂ und CO₂) lässt sich aus dem gemessenen ortsabhängigen Stromverlauf auch das Mischungsverhältnis ermitteln (z.B. aus dem Verhältnis bestimmter Strommaxima).

Die physikalischen Zusammenhänge sind relativ komplex und können nur durch Simulation bzw. durch Referenzmessungen ermittelt werden. Ein einfaches Modell zur Erklärung der Funktionsweise wird im Folgenden anhand der Figur 3 erläutert, wobei der Einfachheit als Beispiel angenommen wird, dass das zu untersuchende Fluid ein Gasgemisch aus nur zwei Komponenten, nämlich Sauerstoff (O₂, molare Masse: ca. 32 g/mol) und Kohlendioxid (CO₂, molare Masse: ca. 44 g/mol), ist. Das Verhältnis der molaren Massen der einzelnen Stoffkomponenten (im erwähnten Beispiel 44/32 = 1,375) bestimmt auch das Verhältnis der Driftgeschwindigkeiten der Ionen, wodurch es möglich ist, die Ionen der einzelnen Stoffkomponenten (O₂ und CO₂) zu separieren. Das heißt, Ionen unterschiedlicher Stoffkomponenten rekombinieren an unterschiedlichen Messelektroden 4.x und der resultierende Messelektrodenstrom i_{M}(x) an einer bestimmten Position x entlang der Längsrichtung des Strömungskanals 1 repräsentiert die Menge der jeweiligen Komponente im Fluid. In dem in Figur 3a gezeigten Beispiel rekombinieren Sauerstoffionen vorzugsweise an der Messelektrode 4.1' und die Kohlendioxidionen an der Messelektrode 4.3, wohingegen an dem Elektrodenpaar 4.2, 4.2' keine oder nur wenige Ionen rekombinieren. Als Resultat erhält man den in Figur 3b gezeigten Stromverlauf i_{M}(x), bei dem an der Ortskoordinate der Messelektroden 4.1 und 4.3 jeweils ein lokales Strommaximum (verursacht durch die O₂- bzw. CO₂-Ionen) und an der Ortskoordinate der Messelektroden 4.2 ein lokales Minimum beobachtet werden kann. Die Position der Maxima ist charakteristisch für die Stoffkomponente selbst und aus dem Verhältnis der Maxima kann auf das Mischungsverhältnis rückgeschlossen werden. Die Messung bzw. Detektion funktioniert umso genauer, je feiner, die Ortsauflösung der Anordnung ist. Nichtsdestotrotz ist es in vielen Anwendungen (jedoch nicht zwangsläufig) notwendig, die Sensoranordnung mittels Referenzmessungen mit Fluiden mit bekannter Stoffzusammensetzung zu kalibrieren, d.h. eine Messung beinhaltet meist einen Vergleich mit einem bekannten Referenz-Stromverlauf.

Die Qualität der Messergebnisse, d.h. die Möglichkeit unterschiedliche Fluidkomponenten qualitativ und quantitativ zu unterscheiden, kann verbessert werden, indem an die Messelektroden 4.x, 4.x' definierte Referenzpotentiale angelegt werden. In den Beispielen aus den Figuren 1 bis 3 wird je zwischen zwei gegenüberliegenden Messelektroden (4.1 und 4.1', 4.2 und 4.2', 4.3 und 4,3', etc.) eine definierte Spannung (Gleich- oder Wechselspannung) angelegt, welche ein jeweils elektrische Feld quer zur Längsrichtung des Strömungskanals (und damit quer zur Strömungsrichtung des Fluids) zur Folge hat. In den Figuren 1 und 2 ist diese Situation durch die mit E₁, E₂, ..., E₆ beschrifteten Pfeile, die jeweils die Orientierung des E-Feldes anzeigen, skizziert (ein Doppelpfeil symbolisiert ein Wechselfeld). Die Messelektroden 4.x' liegen dabei auf einem konstanten Referenzpotential, z.B. Masse GND. Gemessen wird der Strom i_{M} durch die Messelektroden 4.x. Die Höhe dieser Spannungen bzw. der resultierenden Querfelder E₁, E₂, ..., E₆ wird z.B. experimentell ermittelt. Für ein bekanntes Fluid mit verschiedenen definierten stofflichen Bestandteilen (Komponenten) wird die Stärke der jeweiligen E-Felder solange variiert bis eine ausreichend gute "Trennung" der einzelnen Fluidkomponenten erreicht wird, d.h. bis ein ortsabhängiger Stromverlauf an den Messelektroden 4.x ausgeprägte lokale Maxima zeigt, die jeweils einem Fluidbestandteil zuordenbar sind und dessen Höhe die Konzentration (den relativen Anteil) des Bestandteils im Fluid repräsentiert.

Beispielsweise wird die Sensoranordnung auf ein Gasgemisch aus Stickstoff (N), Sauerstoff (O₂) und Kohlendioxid (CO₂) eingestellt, wobei das Mischungsverhältnis bekannt ist. Die elektrischen Querfelder E₁, E₂, etc. werden so eingestellt, dass der an den Messelektroden 4.x gemessene positionsabhängige Strom i_{M}(x) drei lokale Maxima aufweist, z.B. ein den Stickstoff repräsentierendes Maximum an der Stelle x₁, ein den Sauerstoff repräsentierendes Maximum an der Stelle x₂, und ein das Kohlendioxid repräsentierende Maximum an der Stelle x₃. Das Verhältnis i_{M}(x₁)/i_{M}(x₂)/i_{M}(x₃) ist ein Messwert für das Mischungsverhältnis der drei Fluidkomponenten. Ändert sich das Mischungsverhältnis, dann ändern sich die Höhe der Maxima i_{M}(x₁), i_{M}(x₂) und i_{M}(x₃) entsprechend. Für eine quantitative Messung der Konzentration eines Gasbestandteils muss die Höhe des zugehörigen Maximums mit einem Referenzmaximum eines Referenzstromverlaufs i_{M,REF}(x) vergleichen werden, der mithilfe eines Testfluids mit bekannter Gaszusammensetzung ermittelt wurde.

Die oben erwähnte Einstellung der Elektrischen Querfelder E₁, E₂, etc., die über die an den Messelektroden 4.x, 4.x' anliegenden Spannungen eingestellt werden, sind praktisch ein "Schlüssel", der für eine Messung bekannt sein muss. Das heißt, bei einer Referenzmessung zur Ermittlung des Referenzstromverlaufes i_{M,REF}(x) (oder alternativ eines korrespondierenden Ladungs- oder Spannungsverlaufes) und bei einer Messung mit unbekannter Fluidzusammensetzung muss der gleiche "Schlüssel" (d.h. die gleiche Einstellung der elektrischen Querfelder) verwendet werden, um eine sinnvolle Messung zu ermöglichen.

Alternativ zu den elektrischen Feldern quer zur Strömungsrichtung, können auch Magnetfelder angelegt werden, die so ausgerichtet sind, dass die resultierende (Lorentz-) Kraft auf die Ionen in Richtung der Messelektroden wirkt (d.h. Mangetdfeld und Strömungsrichtung definieren eine Ebene und parallel dazu liegen die Messelektroden).

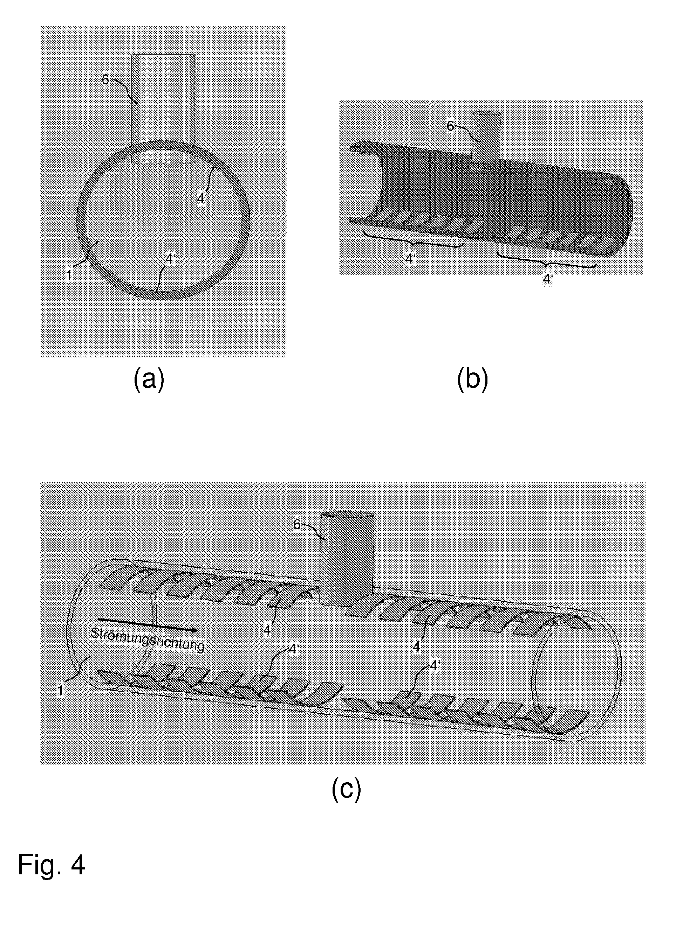

In Figur 4 sind Skizzen der Messanordnung aus Figur 2 in unterschiedlicher Ansicht dargestellt. Figur 4a zeigt eine Ansicht in Strömungsrichtung, Figur 4b eine perspektivische Schnittdarstellung und Figur 4c eine perspektivische Darstellung mit transparentem Strömungskanal 1. Die Ionisationskammer mit den beiden Messelektroden 3.1 und 3.2 zur Geschwindigkeitsmessung ist im vorliegenden Beispiel zylinderförmig. Die Anordnung der Messelektroden 4 ist symmetrisch um die Hochspannungselektrode, was eine Messung der Fluidzusammensetzung unabhängig davon erlaubt, in welche Richtung das Fluid strömt. Die Geschwindigkeitsmessung kann dabei in einer an sich bekannte Weise erfolgen (siehe Einleitung).

In den Figuren 5 und 6 sind zusätzlich zu dem Ausführungsbeispiel aus Figur 2 noch weitere Beispiele zur Anordnung der Hochspannungselektrode 2 (Anode) in der Ionisationskammer 6 gezeigt. Beide Anordnungen (aus Fig. 5 und 6) entsprechen im Wesentlichen der Anordnung aus Figur 2, wobei zusätzlich ein Magnet 8 (z.B. Permanentmagnet, Helmholzspule, etc.) in der Kammer 6 angeordnet ist. In dem in Figur 5 dargestellten Beispiel sind die Magneten 8 so angeordnet, dass die Magnetfeldlinien im Wesentlichen senkrecht zu der langgestreckten (z.B. nadelförmigen) Hochspannungselektrode stehen. Die Magnetfeldlinien durchdringen das ionisierte Fluid ca. 2 mm unterhalb der Spitze der Hochspannungselektrode 2 und stehen annähernd senkrecht auf das (in der Skizze in Figur 5) im Wesentlichen vertikal verlaufende elektrische Feld , welches von der Hochspannungselektrode 2 erzeugt wird. Dadurch werden die Ionen auf eine Kreisbahn gedrängt und der Weg der Ionen verlängert sich bevor sie durch die Öffnung 7 in den Strömungskanal 2 gelangen. Die Anordnung in Figur 6 funktioniert in ähnlicher weise, jedoch ist bei dem Beispiel aus Figur 6 eine Spule parallel zu der nadelförmigen Hochspannungselektrode angerodnet. In beiden Fällen fließt der Strom durch die Hochspannungselektrode auch durch die Spulen. Durch das zusätzliche Magnetfeld quer zur Hochspannungselektrode 2 wird eine (Lorentz-) Kraft auf die Ionen erzeugt. Die Kraft bewirkt die Verlängerung des Weges, den die Ionen zurücklegen. Die Lorentzkraft bewirkt die Präzessionsbewegung der Ionen um die Magnetfeldlinien. Die Teilchen werden durch Diffusion und Teilchenstöße (natürliche Verluste) aus der Ionisationskammer herausgetragen. Die Wirkung des Magnetfeldes beruht auf dem Prinzip der Magnetischen Flasche. Das Magnetfeld verstärkt die Ionisation und die Intensität der resultierenden Messsignale i_{M}(x). Die Verstärkung wird erzeugt indem der Emitterstrom auch über die Spulen geleitet wird, die das Magnetfeld erzeugen. Je höher das Magnetfeld, umso höher der Emitterstrom. Durch diese Kopplung wird der Strom zusätzlich verstärkt, bis sich ein stationärer Zustand einstellt.

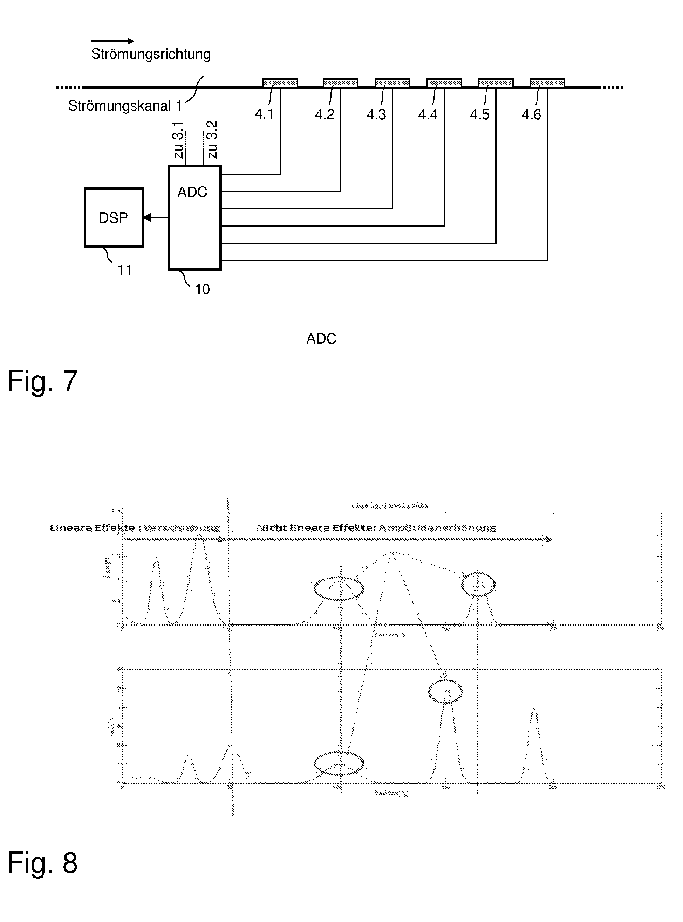

In Figur 7 ist die Messdatenerfassung für die Sensoranordnung aus den Figuren 1 und 2 skizziert. Jede Messelektrode ist einem Kanal eines Messdatenerfassungssystems (ADC 10, Signalprozessor 11) zugeführt, das dazu ausgebildet ist, in jedem Kanal den Strom durch die jeweilige Messelektrode 3.1, 3.2, 4.x zu messen und gegebenenfalls die Elektrodenspannung zu regeln, sowie die Messdaten für die weitere Verarbeitung (digitaler Signalprozessor 11) zu speichern.

Gemäß einem Beispiel der Erfindung umfasst das Verfahren zur Detektion von Fluiden mit einer bestimmten stofflichen Zusammensetzung folgendes:
(1) Mit Hilfe einer Hochspannungsquelle 5 wird an die Hochspannungselektrode 2 eine derart hohe Spannung angelegt, dass das strömende Fluid zumindest teilweise ionisiert wird und in der Hochspannungselektrode 2 Ladungsträger generiert und diese emittiert werden, die zumindest teilweise von den Messelektroden 3, 4 wieder eingefangen werden können. Die von der Hochspannungselektrode 2 emittierten Ladungsträger bilden den Emitterstrom.
(2) An den einzelnen Messelektroden 3, 4, die jeweils in einem bestimmten Abstand voneinander angeordnet sind, werden elektrische Größen wie z.B. Strom und Spannung, Leitfähigkeit, etc. (in den oben erläuterten Beispielen der Strom i_{M}) gemessen.
(3) Die an den einzelnen, an verschiedenen Orten im Strömungskanal angeordneten Messelektroden 3,4 gemessenen elektrischen Größen weisen eine gewisse räumliche Verteilung i_{M}(x) auf. Diese räumliche Verteilung der gemessenen Größen (z.B. Elektrodenstrom vs. Ort) wird bestimmt.
(4) Die ermittelte räumliche Verteilung der gemessenen elektrischen Größen wird mit zumindest einer gespeicherten Referenzverteilung - je nach Anwendung auch mit mehreren Referenzverteilungen - verglichen. Eine Referenzverteilung kann z.B. charakteristisch für eine bestimmte stoffliche Zusammensetzung des Fluids sein.
(5) Abhängig von dem Vergleich wird ein Ausgangssignal bereitgestellt, das anzeigt, ob die räumlichen Verteilung der gemessenen elektrischen Größen mit einer Referenzverteilung zumindest teilweise korrespondiert.

Als Fluide kommen Abgase aus Verbrennungsprozessen (z.B. in einer Verbrennungskraftmaschine), sowie Prozessgase aus Industrieanlagen, Umluft aus Reinräumen, etc. in Betracht. Im Fall eines Verbrennungsprozesses kann der Typ des verwendeten Brennstoffs (z.B. Benzine, Dieselöle, Kerosin, etc.) eine unterschiedliche stoffliche Zusammensetzung der beim Verbrennungsprozess entstehenden Abgase zur Folge haben. Kennt man die für das jeweilige Abgas (z.B. Abgase aus Diesel- und Benzinmotoren) die oben erwähnte charakteristische Verteilung der an den Messelektroden 3, 4 gemessenen elektrischen Größen, kann mit Hilfe der oben beschriebenen Sensoranordnung durch Vergleich der aktuell gemessenen Verteilung mit einer bekannten Referenzverteilung detektiert werden, aus welchem Verbrennungsprozess das jeweilige Abgas stammt. Auf diese Art können z.B. Gasgemsiche mit einem bestimmten Anteil an beispielsweise Stickstoff (N₂) und/oder Sauerstoff (O₂) erkannt werden.

Abhängig von der (gemessenen) Strömungsgeschwindigkeit kann sich die für ein bestimmtes Fluid mit gegebener stofflichen Zusammensetzung die oben erwähnte Verteilung verschieben. Durch einen Vergleich einer gemessenen Verteilung mit einer bekannten Referenzverteilung, die bei einer bestimmten Strömungsgeschwindigkeit (z.B. bei ruhendem Fluid) aufgenommen wurde, kann also auch auf die Strömungsgeschwindigkeit geschlossen werden. Jeder gespeicherten Referenzverteilung ist also auch eine bekannte Strömungsgeschwindigkeit (z.B. Null) zugeordnet. Die Referenzverteilungen werden z.B. empirisch ermittelt.

Im Falle einer gleichmäßigen Verteilung der Messelektroden 3, 4 entlang einer Linie parallel zur Längsachse des Strömungskanals 1 entspricht die Verteilung der gemessenen elektrischen Größen einer (abgetastete) Funktion, die die Abhängigkeit der jeweiligen Größe (Strom und/oder Spannung) von einer Ortskoordinate beschreibt. Die Ortskoordinate repräsentiert dabei einen Punkt auf der Längsachse des Strömungskanals 2. Die Messelektroden 3 bzw. 4 können, müssen aber nicht, symmetrisch um die Hochspannungselektrode(n) angeordnet sein. Alternativ oder zusätzlich kann auch ein Mittelwert über die Messwerte an den Messelektroden gebildet werden. Bei der Mittelwertbildung kann auch nur eine Teilmenge der Messelektroden berücksichtigt werden, z.B. nur jene Elektroden 3, 4, die stromaufwärts von der Hochspannungselektrode 2 und/oder nur jene, die stromabwärts von der Hochspannungselektrode 2 angeordnet sind. Abhängig von dem ermittelten Spannungs- oder Strom-Mittelwert bzw. abhängig von den einzelnen Mittelwerten über eine Teilmenge der Elektroden kann ebenfalls auf die Strömungsgeschwindigkeit rückgeschlossen werden.

Bei der Detektion eines Fluids mit einer bestimmten stofflichen Zusammensetzung spielt mehr das "Muster" (d.h. die Form) der ermittelten Verteilung eine Rolle, insbesondere sind die Anzahl der Extrema (Maxima und Minima) in der gemessenen räumlichen Verteilung der Signalamplituden und deren relative Position zueinander charakteristisch. Wenn bei dem Vergleich einer aktuell gemessenen Verteilung mit einer Referenzverteilung nur die Position und die Anzahl der (lokalen) Maxima bzw. Minima, die einen gewissen Schwellwert über- bzw. unterschreiten, betrachtet werden, können eventuell auftretende nichtlineare Effekte (z.B. ungleichmäßige Amplitudenveränderungen über der Ortskoordinate) ausgeblendet werden.

Die Position und die Höhe der Extrema kann durch das Anlegen von elektrischen Querfeldern an jeweils gegenüberliegenden Messelektroden beeinflusst werden. Die Querfelder sind dabei, wie oben beschrieben wie ein Schlüssel, der bei der Messung der elektrischen Größen (Strom, Ladung) an den Messelektroden der gleiche sein muss wie bei der Referenzmessung, bei der die zu einem bestimmten Fluid zugehörige Referenzverteilung gemessen wird.

Des Weiteren können beim Vergleichen der gemessenen räumlichen Verteilung mit einer Referenzverteilung eine räumliche Skalierung und/oder eine Verschiebung der gemessenen räumlichen Verteilung in Bezug auf die Referenzverteilung berücksichtigt werden. Unter räumlicher Skalierung versteht man hier, dass sich z.B. die räumlichen Abstände der Maxima bzw. Minima in der gemessenen Verteilung abhängig von der Strömungsgeschwindigkeit des Fluids verändern können. Diese nichtlinearen Effekte sind in Figur 8 beispielhaft gezeigt.

## Patentansprüche

1. Verfahren zur Detektion von Fluiden mit einer bestimmten stofflichen Zusammensetzung, das Folgendes umfasst:
Ionisieren des Fluids mit Hilfe von zumindest einer mit einer Hochspannungsquelle verbundenen Hochspannungselektrode (2), sodass in der Hochspannungselektrode (2) Ladungsträger erzeugt, diese emittiert und von Messelektroden (3, 4) zumindest teilweise wieder eingefangen werden;
Messen von elektrischen Größen an mehreren, sowohl von der Hochspannungselektrode (2) als auch zueinander räumlich beabstandet angeordneten Messelektroden (3, 4);
Bestimmen der räumlichen Verteilung der gemessenen elektrischen Größen;
Vergleichen der räumlichen Verteilung der gemessenen elektrischen Größen mit zumindest einer Referenzverteilung, welche charakteristisch ist für die bestimmte stoffliche Zusammensetzung des Fluids;
Bereitstellen eines Ausgangssignals, welches Abhängig von dem Vergleich das Vorhandensein einer Fluidkomponente und/oder dessen Konzentration in dem Fluid anzeigt.

2. Verfahren gemäß Anspruch 1, bei dem die gemessenen elektrischen Größen Ströme und/oder Spannungen sind.

3. Verfahren gemäß Anspruch 1 oder 2, das zusätzlich umfasst:
Bestimmen eines Mittelwertes der an den Messelektroden gemessenen elektrischen Größen, um eine gemittelte räumliche Verteilung zu erhalten;
Bestimmen eines die Strömungsgeschwindigkeit des Fluid repräsentierenden Ausgangssignals abhängig von der gemittelten räumlichen Verteilung.

4. Verfahren gemäß Anspruch 1 oder 2, das zusätzlich umfasst:
Ermitteln einer Verschiebung zwischen der räumlichen Verteilung der gemessenen elektrischen Größen und zumindest einer der Referenzverteilungen;
Bestimmen eines die Strömungsgeschwindigkeit des Fluid repräsentierenden Ausgangssignals abhängig von der Verschiebung.

5. Verfahren gemäß Anspruch 1 oder 2, das zusätzlich umfasst:
Bestimmen eines Mittelwertes der an den Messelektroden gemessenen elektrischen Größen, um eine gemittelte räumliche Verteilung zu erhalten;
Ermitteln einer Verschiebung zwischen der gemittelten räumlichen Verteilung der gemessenen elektrischen Größen und zumindest einer der Referenzverteilungen;
Bestimmen eines die Strömungsgeschwindigkeit des Fluid repräsentierenden Ausgangssignals abhängig von der Verschiebung.

6. Verfahren gemäß einem der Ansprüche 1 bis 5, bei dem beim Vergleichen der gemessenen räumlichen Verteilung mit einer Referenzverteilung eine räumliche Skalierung und/oder eine Verschiebung der gemessenen räumlichen Verteilung in Bezug auf die Referenzverteilung berücksichtigt wird.

7. Verfahren nach einem der Ansprüche 1 bis 6, bei die räumliche Verteilung der gemessenen elektrischen Größen der ortsabhängige Stromverlauf (i_{M}(x)) durch die Messelektroden entlang des Strömungskanals (1) ist und lokale Maxima des Stromverlaufs (i_{M}(x)) ermittelt werden.

8. Verfahren nach Anspruch 7, bei dem aufgrund der Position eines lokalen Maximums eine dem lokalen Maximum zugeordnete Komponente eines im Strömungskanal (1) fließenden Fluids identifiziert wird.

9. Verfahren nach Anspruch 7 oder 8, bei dem aus dem Betrag eines lokalen Maximums und dem Betrag eines korrespondierenden lokalen Maximums in der Referenzverteilung die Konzentration einer Fluidkomponente in dem im Strömungskanal (1) fließenden Fluid bestimmt wird.

10. Sensoranordnung zur Detektion von Fluiden mit einer bestimmten stofflichen Zusammensetzung; die Sensoranordnung umfasst Folgendes:
einen durch eine Kanalwand zumindest teilweise begrenzten Strömungskanal (1) zum Führen der Fluidströmung;
zumindest eine an der Innenseite der Kanalwand (1) angeordnete Hochspannungselektrode (2) zum Erzeugen von Ladungsträgern, die einen Emitterstrom bilden;
mehrere im Strömungskanal (1) voneinander beabstandet angeordnete Messelektroden (3, 4) zum Einfangen der Ladungsträger;
zumindest eine Hochspannungsquelle, die dazu ausgebildet ist, eine derart hohe Spannung für die zumindest eine Hochspannungselektrode (2) zu erzeugen, dass das Fluid im Strömungskanal (1) zumindest teilweise ionisiert ist;
eine Mess- und Auswerteeinheit (10), die mit den Messelektroden (3, 4) elektrisch verbunden ist und die dazu ausgebildet ist, an den Messelektroden (3, 4) elektrische Größen zu messen, die räumliche Verteilung der gemessenen elektrischen Größen zu bestimmen, diese mit zumindest einer Referenzverteilung, welche charakteristisch ist für die bestimmte stoffliche Zusammensetzung des Fluids, zu vergleichen und ein Ausgangssignal bereitzustellen, das anzeigt, ob die räumlichen Verteilung der gemessenen elektrischen Größen mit einer Referenzverteilung zumindest teilweise korrespondiert.

11. Sensoranordnung gemäß Anspruch 10, bei der die Messelektroden an einer Innenwand des Strömungskanals (1) entlang einer Längsrichtung des Kanals, in der das Fluid strömt, angeordnet sind.

12. Sensoranordnung gemäß Anspruch 11, bei der Gruppen von Messelektroden (3, 4) in Längsrichtung neben der Hochspannungselektrode (2) und/oder gegenüber der Hochspannungselektrode (2) im Strömungskanal angeordnet sind.

13. Sensoranordnung gemäß einem der Ansprüche 10 bis 12, bei der mehrere Hochspannungselektroden (2) entlang des Umfangs des Strömungskanals (1) angeordnet sind.

14. Sensoranordnung gemäß einem der Ansprüche 10 bis 13, bei der bei eine oder mehrere der Messelektroden (4; 4.1, 4.2, ...) auf ein definiertes elektrisches Potential (GND, V_{REF}) gesetzt werden.

15. Sensoranordnung gemäß Anspruch 14, bei der bei eine oder mehrere der Messelektroden (4; 4.1, 4.2, ...) auf ein definiertes elektrisches Potential (GND, V_{REF}) gesetzt werden und an jeweils zwei gegenüberliegenden Messelektroden (4.1, 4.1', ...) eine vorgebbare elektrische Gleich- oder Wechselspannung anliegt.
